# EUROPÄISCHE PATENTANMELDUNG

(11) **EP 1 063 198 A1**
(43) Veröffentlichungstag der Anmeldung: **27.12.2000**
(21) Anmeldenummer: 00113525.0
(22) Anmeldetag: 26.06.2000
(51) Int. Cl.: C01B 31/20

(54) **Verfahren zur weitgehenden Abtrennung von Sauerstoff aus Sauerstoff enthaltendem flüssigen Kohlendioxid unter Zufuhr von Wärme**

(30) Priorität: 25.06.1999 DE 19929082
(71) Anmelder: Breywisch, Dr. Ingenieurbüro für Verfahrenstechnik, 69226 Nussloch (DE)
(72) Erfinder: BREYWISCH, Dr. Dieter, 69226 Nussloch (DE)
(74) Vertreter: Schneiders, Josef, Dipl.-Ing.

(57) **Zusammenfassung**

Die Erfindung betrifft ein Verfahren zur Abtrennung von Sauerstoff von in einem Speichertank (4) befindlichem, flüssigem Kohlendioxid, bei welchem das noch Sauerstoff enthaltende Kohlendioxid im Bereich der Flüssigkeitsoberfläche ohne Turbulenz in den Speichertank (4) eingeleitet wird, so daß in dem Speichertank (4) eine Trennung in eine sauerstoffreiche, spezifisch leichtere Phase einerseits und eine sauerstoffarme, spezifisch schwerere Phase andererseits stattfindet, welche aus dem Speichertank abgezogen wird. Um die Abtrennung von Sauerstoff zu beschleunigen, schlägt die Erfindung vor, daß dem zugeleiteten flüssigen Kohlendioxid vor Einleitung in den Speichertank (4) Wärme zugeführt wird und daß der durch die Wärmezufuhr verdampfende, mit Sauerstoff angereicherten Kohlendioxidanteil nach Trennung der Gasphase von der Flüssigphase aus dem Speichertank (4) abgezogen wird.

## Beschreibung

Die Erfindung betrifft ein Verfahren zur weitgehenden Abtrennung von Sauerstoff aus in einem Speichertank oder einer Rohrleitung befindlichem flüssigem Kohlendioxid, bei welchem das noch Sauerstoff enthaltende Kohlendioxid im Bereich der Flüssigkeitsoberfläche ohne Turbulenz in den Speichertank oder die Rohrleitung eingeleitet wird, so daß in dem Speichertank oder der Rohrleitung eine Trennung in eine sauerstoffreiche, spezifisch leichtere Phase einerseits und eine sauerstoffarme, spezifisch schwerere Phase andererseits stattfindet, welche aus dem Speichertank oder der Rohrleitung abgezogen wird.

Es ist bekannt, aus dem aus Gärprozessen gewonnenen, Sauerstoffanteile enthaltenden Kohlendioxid nach Reinigung von organischen Bestandteilen, Verdichtung und Trocknung während oder nach einer Verflüssigung, durch Abblasen aus dem Gasraum über dem flüssigen Kohlendioxids Anteile des flüssigen Sauerstoffs und anderer Fremdgase zusammen mit einem größeren Anteil von Kohlendioxid zu entfernen. Die durch diese Sauerstoffabtrennung erreichte Reinheit des flüssigen Kohlendioxids ist jedoch für einige Zwecke nicht ausreichend.

Des weiteren ist ein Verfahren Aufreinigung von Kohlendioxid bekannt, bei welchem das Kohlendioxid nach der Verflüssigung in einer Rektifikationskolonne durch entgegenströmendes, verdampftes Kohlendioxid weitestgehend von Sauerstoff und anderen Fremdgasen befreit und das verunreinigte, gasförmige Kohlendioxid abgeblasen wird. Hierdurch gelangt sehr sauerstoffarmes, flüssiges Kohlendioxid in den Speichertank.

Nach dem Stande der Technik (DE 198 04 324 A1 und DE 198 52 923 A1) sind auch Verfahren bekannt, bei denen flüssiges, Sauerstoff enthaltendes Kohlendioxid ohne Turbulenz in einen Speichertank eingeleitet oder durch eine Rohrleitung transportiert wird, und die sich dabei langsam im oberen Bereich ansammelnde sauerstoffreichere Phase von der sauerstoffarmen unteren Phase getrennt wird.

Dem erfindungsgemäßen Verfahren liegt die Aufgabe zugrunde, den Vorgang zur Gewinnung einer sauerstoffarmen Phase flüssigen Kohlendioxids aus ohne Turbulenz in einen Speicher eingeleiteten oder durch eine Rohrleitung transportiertem Kohlendioxid unter weitgehender Trennung von Sauerstoff in möglichst kurzer Zeit durchzuführen.

Zur Lösung dieser Aufgabe schlägt die Erfindung ausgehend von dem Verfahren der eingangs genannten Art vor, daß dem noch Sauerstoff enthaltenden flüssigen Kohlendioxid vor Einleitung in den Speichertank oder die Rohrleitung Wärme zugeführt wird und daß der durch die Wärmezufuhr verdampfende, mit Sauerstoff angereicherte Kohlendioxidanteil nach Trennung der Gasphase von der Flüssigphase aus dem Speichertank oder der Rohrleitung abgezogen wird.

Das Verfahren gemäß der Erfindung basiert auf der Erkenntnis, daß verschiedene Fremdgase, darunter Sauerstoff, zwar stabil an flüssiges Kohlendioxid gebunden sind, von dem flüssigen Kohlendioxid aber verhältnismäßig schnell abgetrennt werden können, wenn gasförmiges Kohlendioxid durch ruhendes oder sehr langsam fließendes flüssiges Kohlendioxid hindurch tritt. Die abgetrennten Fremdgase, darunter Sauerstoff, reichern sich in dem durch Wärmezufuhr entstehenden gasförmigen Kohlendioxid an, so daß im Ergebnis weitestgehend reines flüssiges Kohlendioxid zurückbleibt. Erfindungsgemäß wird also dem flüssigen, noch sauerstoffhaltigen Kohlendioxid zwecks Bildung von gasförmigen Kohlendioxid Wärme zugeführt. Dabei ist wesentlich, daß während des gesamten Reinigungsvorganges in dem flüssigen Kohlendioxid möglichst wenig Turbulenz herrscht, damit die durch die Wärmezufuhr erzeugten, sauerstoffhaltigen Mikrobläschen nicht in die spezifisch schwereren, sauerstoffarmen Schichten des im Speichertank befindlichen flüssigen Kohlendioxids gelangen.

Eine erste Ausführungsform des Verfahrens gemäß der Erfindung sieht vor, daß dem noch Sauerstoff enthaltenden, flüssigen Sauerstoff die Wärme direkt durch Einleiten von gasförmigen, verdichtetem Kohlendioxid zugeführt wird. Diese Verfahrensvariante hat den Vorteil, daß die Menge an gasförmigem Kohlendioxid von vornherein verhältnismäßig groß ist, wobei die sich durch die Wärmezufuhr entwickelnden Mikrobläschen sich schnell mit den Bläschen des eingeleiteten gasförmigen Kohlendioxids verbinden, so das weniger die Gefahr besteht, daß zu viele sehr feine Mikrobläschen in den Speichertank gelangen.

Gegenstand der Erfindung ist weiterhin eine Vorrichtung zur Durchführung des Verfahrens der obengenannten Art, mit einem Speichertank, der unten mit einer Leitung für das Abziehen der sauerstoffarmen Flüssigphase, oben mit einer Leitung für das Abziehen der sauerstoffreichen Gasphase sowie mit einem Zuleitungssystem versehen ist, welches das noch Sauerstoff enthaltende flüssige Kohlendioxid dem Speichertank im Bereich der Flüssigkeitsoberfläche ohne Turbulenz zuführt, wobei sich diese Vorrichtung dadurch kennzeichnet, daß in das Zuleitungssystem einer Mischkammer eingeschaltet ist, in der das zugeführte, noch Sauerstoff enthaltende flüssige Kohlendioxid mit gasförmigem, verdichtetem Kohlendioxid vermischt wird. Mit einer solchen Mischkammer ist es auf einfache Art und Weise möglich, dem zu reinigenden, Sauerstoff enthaltenden Kohlendioxid zugleich mit dem gasförmigen, verdichteten Kohlendioxid in ausreichendem Maße Wärme zuzuführen.

Um das in der Mischkammer hergestellte Gemisch turbulenzfrei in das bereits im Speichertank befindliche flüssige Kohlendioxid einzubringen, ist weiterhin vorgesehen, daß das Zuleitungssystem ein bewegtes System enthält, welches sich dem jeweiligen Flüssigkeitsniveau im Speichertank anpaßt.

Eine alternative Ausführungsform des Verfahrens gemäß der Erfindung sieht vor, daß dem noch Sauerstoff enthaltenden flüssigen Kohlendioxid die Wärme indirekt durch ein im Zulauf befindliches Wärmeaustauscherrohr zugeführt wird.

Zur Durchführung dieser Verfahrensvariante ist weiterhin eine Vorrichtung Gegenstand der Erfindung, die einen Speichertank aufweist, der unten mit einer Leitung für das Abziehen der sauerstoffarmen Flüssigphase, oben mit einer Leitung für das Abziehen der sauerstoffreichen Gasphase sowie mit einem Zuleitungsrohr versehen ist, welches das noch Sauerstoff enthaltende flüssige Kohlendioxid dem im Speichertank befindlichen, flüssigen Kohlendioxid im Bereich der Flüssigkeitsoberfläche ohne Turbulenzen zuführt, wobei sich diese Vorrichtung dadurch kennzeichnet, daß das Zuleitungssystem ein von unten in den Speichertank ragendes, oben offenes Steigrohr großen Querschnittes aufweist, in welchem ein von einem Heizmedium durchflossenes Wärmetauscherrohr angeordnet ist und von dessen oberem Ende das ausströmende flüssige Kohlendioxid ohne Turbulenz der Flüssigkeitsoberfläche des im Speichertank befindlichen, flüssigen Kohlendioxids zugeführt wird.

Das erfindungsgemäß vorgeschlagene Steigrohr ist besonders raumsparend und hat gewissermaßen eine Doppelfunktion als Transportmittel für das zuzuführende, noch Sauerstoff enthaltende flüssige Kohlendioxid einerseits und als Vorrichtung zur Wärmezufuhr andererseits.

Um ein bewegliches Einleitsystem am oberen Ende des Steigrohres zu vermeiden und dennoch die turbulenzfreie Einleitung zu gewährleisten, ist weiterhin vorgesehen, daß um das obere Ende des Steigrohres eine schraubenlinienförmige offene Rinne mit kleinem Neigungswinkel verläuft, über welche das am oberen Ende des Steigrohres austretende flüssige Kohlendioxid turbulenzfrei der Flüssigkeitsoberfläche des Speichertanks zugeführt wird.

Um schon im Bereich dieser Rinne mit Sauerstoff angereichertes gasförmiges Kohlendioxid aus dem herabfließenden, flüssigen Kohlendioxid abscheiden zu können, ist diese offene Rinne ganz oder teilweise mit Edelstahlwolle gefüllt, an deren Fasern sich die Mikrobläschen sammeln und abscheiden.

Um den Flüssigkeitsspiegel in dem Speichertank einigermaßen konstant zu halten, ist weiterhin vorgesehen, daß in der Leitung für das Abziehen der Flüssigphase ein Siphon angeordnet ist, dessen höchste Stelle mit dem Gasphasenraum des Speichertanks verbunden ist.

Das Wärmetauscherrohr wird zweckmäßig von Kohlendioxid vor dem Verflüssiger durchströmt. Auf diese Weise wird dem zu verflüssigendem Kohlendioxid bereits Wärme entzogen, so daß für den Kühlvorgang weniger Energie benötigt wird.

Ausführungsbeispiele der Erfindung werden im folgenden anhand von Zeichnungen näher erläutert. Es zeigen:
- Fig. 1: Schematisch eine Vorrichtung gemäß der Erfindung in einer ersten Ausführungsform;
- Fig. 2: Schematisch eine Vorrichtung gemäß der Erfindung in einer zweiten Ausführungsform;
- Fig. 3: Die Einbindung der Vorrichtung gemäß Figur 2 in eine Gesamtanlage.

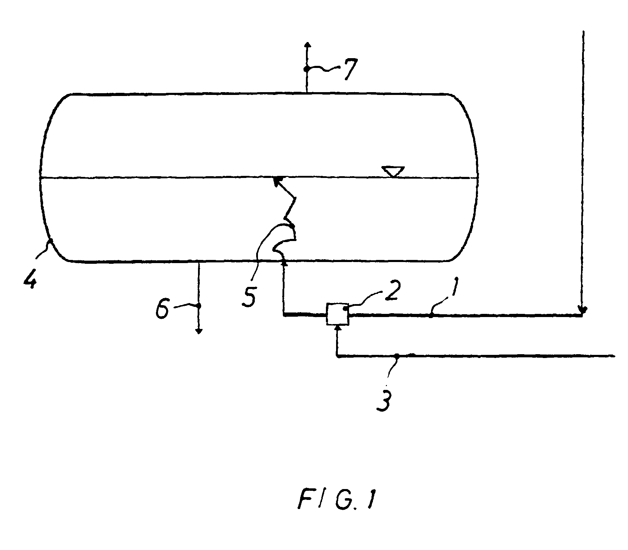

Wie in Figur 1 dargestellt, wird das flüssige, noch Sauerstoff enthaltende Kohlendioxid über eine starre Leitung 1 zu einer Mischkammer 2 geleitet, in welcher es mit über eine Leitung 3 zugeführtem, gasförmigem, verdichtetem Kohlendioxid vermischt wird. Das flüssige, Gasblasen enthaltende Kohlendioxid strömt von der Mischkammer 2 aus an die Flüssigkeitsoberfläche von in einem Speichertank 4 befindlichem Kohlendioxid, in welches es zweckmäßig über ein bewegliches System 5 dem jeweiligen Flüssigkeitsniveau angepaßt eingeleitet wird. Aus dem Speichertank 5 wird die sauerstoffarme flüssige Phase über eine Leitung 6 und die sauerstoffreichere, gasförmige Phase über eine Leitung 7 aus dem Speichertank 4 abgezogen.

An die Stelle der Mischkammer 2 kann gegebenenfalls auch ein Wärmetauscher treten, der mit einem beliebigen Beheizungsmedium beaufschlagt wird.

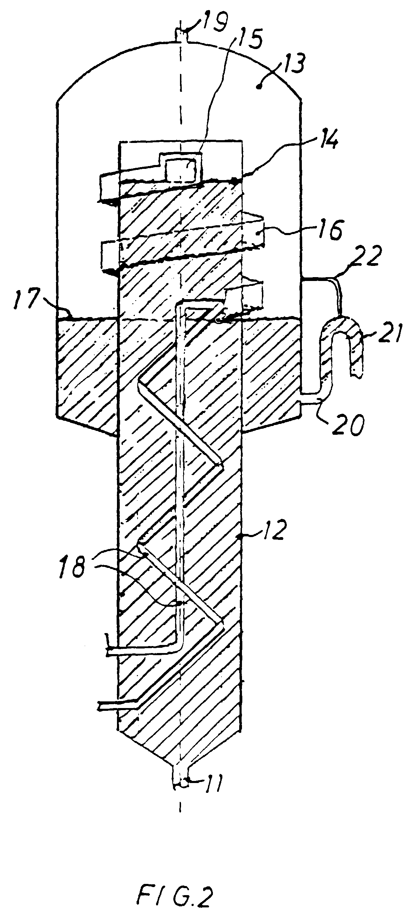

Beim Ausführungsbeispiel gemäß Figur 2 wird das noch Sauerstoff enthaltende Kohlendioxid über eine Leitung 11 einem oben offenen Steigrohr 12 zugeführt, welches von unten in einen Speichertank 13 ragt. Im Bereich des oberen Flüssigkeitsspiegels 14 im Steigrohr 12 ist das Steigrohr 12 mit einer seitlichen Öffnung 15 versehen, an die sich eine schraubenlinienförmig um das obere Ende des Steigrohres erstreckende offene Rinne 16 erstreckt. Diese offene Rinne 16 ist ganz oder teilweise mit Stahlwolle oder dergleichen gefüllt und verläuft mit sanftem Gefälle in Richtung auf den Flüssigkeitsspiegel 17 im Speichertank 13.

Im Inneren des Steigrohres 12 ist weiterhin ein Wärmetauscherrohr 18 angeordnet, welches von einem Wärme abgebenden Medium durchströmt wird, beispielsweise von Kohlendioxid, welches der Verflüssigungs- und Trocknungsvorrichtung der Anlage zugeführt wird.

Der Speichertank 13 ist oben mit einer Leitung 19 für das Abziehen der sauerstoffreichen gasförmigen Phase und unten mit einer Leitung 20 für das Abziehen der sauerstoffarmen flüssigen Phase versehen. In der Leitung 20 befindet sich ein Siphon 21, dessen höchste Stelle über eine Leitung 22 mit dem Gasphasenraum des Speichertanks 13 verbunden ist.

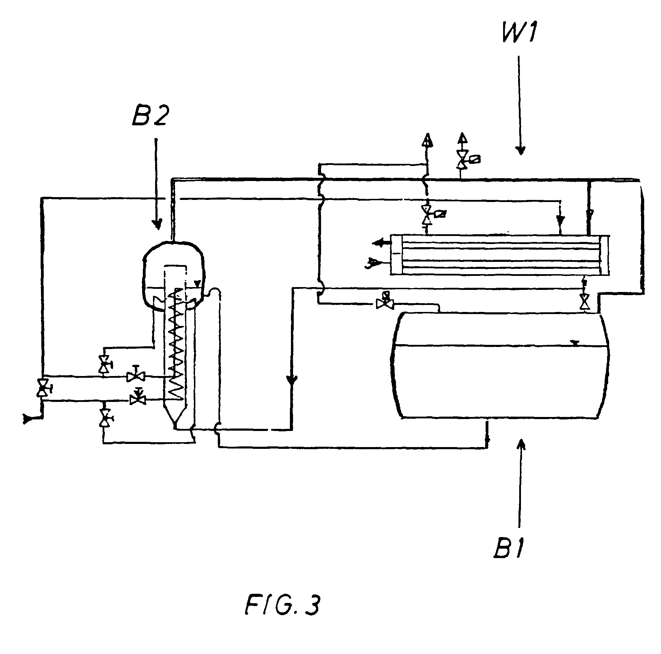

Beim Betrieb der in Figur 3 dargestellten Vorrichtung wird das noch Sauerstoff enthaltende flüssige Kohlendioxid von unten in das Steigrohr 12 eingespeist und fließt wegen des verhältnismäßig großen Querschnittes des Steigrohres 12 langsam nach oben. Während dieses Vorganges wird dem flüssigen Kohlendioxid über das Wärmetauscherrohr 18 Wärme zugeführt, so daß ein Teil des flüssigen Kohlendioxids verdampft und in Form von Mikroblasen nach oben steigt. Das in den Mikroblasen enthaltende Kohlendioxidgas ist mit Sauerstoff und anderen verunreinigenden Gasen angereichert und tritt zum Teil in Bereich des Flüssigkeitsspiegels 14 am oberen Ende des Steigrohres 12 in den Gasphasenraum des Speichertanks 13 ein. Das überfließende, flüssige Kohlendioxid fließt durch die seitliche Öffnung 15 in die Rinne 16 und wird von der Rinne 16 weitestgehend verwirblungsfrei dem Flüssigkeitsspiegel 17 des in dem Speichertank 13 befindlichen flüssigen Kohlendioxids zugeführt. Auf dem Weg dorthin durchströmt das flüssige Kohlendioxid die in der Rinne 16 befindliche Stahlwolle, an welcher sich ein weiterer Teil der Mikrobläschen abscheidet und in den Gasphasenraum des Speichertanks 13 eintritt. Die verbleibenden Mikrobläschen gelangen wegen der turbulenzenfreien Einleitung lediglich in den Oberflächenbereich des in den Speichertanks 13 befindlichen flüssigen Kohlendioxids und treten von dort alsbald in den Gasphasenraum des Speichertanks 13 ein.

Die gereinigte Flüssigphase wird über die Leitung 20 aus dem Speichertank 13 abgezogen. Dabei verhindert der Siphon 21 ein Leerziehen des Speichertanks. Die sauerstoffreiche Gasphase wird über die Leitung 19 abgezogen.

Figur 3 zeigt schließlich, wie die Vorrichtung gemäß Figur 2 in die Gesamtanlage einer Kohlendioxidverflüssigung und -reinigung eingebunden ist. Das verdichtete und getrocknete Kohlendioxid wird teilweise oder vollständig über das Wärmetauscherrohr der Reinigungsvorrichtung B2 zu einem Verflüssiger W1 geleitet, wo es durch Abführen der Verflüssigungswärme kondensiert wird. Das verflüssigte Kohlendioxid wird in die Reinigungsvorrichtung B2 und von dort nach Ausdampfung und weitgehender Abtrennung des Sauerstoffes in einen Vorratstank B1 für flüssiges Kohlendioxid eingeleitet. Die Gasphase aus der Reinigungsvorrichtung B2 wird teilweise oder vollständig nochmals über den Verflüssiger geleitet.

## Patentansprüche

1. Verfahren zur weitgehenden Abtrennung von Sauerstoff aus in einem Speichertank oder einer Rohrleitung befindlichem flüssigen Kohlendioxid, bei welchem das noch Sauerstoff enthaltende Kohlendioxid im Bereich der Flüssigkeitsoberfläche ohne Turbulenz in den Speichertank oder die Rohrleitung eingeleitet wird, so daß in dem Speichertank oder der Rohrleitung eine Trennung in eine sauerstoffreichere, spezifisch leichtere Phase einerseits und eine sauerstoffarme, spezifisch schwerere Phase andererseits stattfindet, welche aus dem Speichertank oder der Rohrleitung abgezogen wird, **dadurch gekennzeichnet,** daß dem noch Sauerstoff enthaltenden flüssigen Kohlendioxid vor der Einleitung in den Speichertank oder die Rohrleitung Wärme zugeführt wird und daß der durch die Wärmezufuhr verdampfende, mit Sauerstoff angereicherte Kohlendioxidanteil nach Trennung der Gasphase von der Flüssigphase aus dem Speichertank oder der Rohrleitung abgezogen wird.

2. Verfahren nach Anspruch 1, dadurch gekennzeichnet, daß dem noch Sauerstoff enthaltenden Kohlendioxid die Wärme direkt durch Einleiten von gasförmigem, verdichteten Kohlendioxid zugeführt wird.

3. Verfahren nach Anspruch 1, dadurch gekennzeichnet, daß dem noch Sauerstoff enthaltenden, flüssigen Kohlendioxid die Wärme indirekt durch ein im Zulauf befindliches Wärmetauscherrohr zugeführt wird.

4. Vorrichtung zur Durchführung des Verfahrens nach den Patentansprüche 1 und 2, mit einem Speichertank (4), der unten mit einer Leitung (6) für das Abziehen der sauerstoffarmen Flüssigphase oben mit einer Leitung (7) für das Abziehen der sauerstoffreichen Gasphase sowie mit einem Zuleitungssystem (1, 3, 5) verbunden ist, welches das noch Sauerstoff enthaltende flüssige Kohlendioxid dem Speichertank (4) im Bereich der Flüssigkeitsoberfläche ohne Turbulenz zuführt, dadurch gekennzeichnet, daß ihm das Zuleitungssystem (1, 3, 5) eine Mischkammer (2) eingeschaltet ist, in der das zugeführte, noch Sauerstoff enthaltende flüssige Kohlendioxid mit gasförmigem, verdichteten Kohlendioxid vermischt wird.

5. Vorrichtung nach Anspruch 4, dadurch gekennzeichnet, daß das Zuleitungssystem (1, 3, 5) ein bewegliches System (5) enthält, welches sich dem jeweiligen Flüssigkeitsniveau im Speichertank (4) anpaßt.

6. Vorrichtung zur Durchführung des Verfahrens nach den Patentansprüchen 1 und 3, mit einem Speichertank (13), der unten eine Leitung (20) für das Abziehen der sauerstoffarmen Flüssigphase oben eine Leitung (22) für das Abziehen der sauerstoffreichen Gasphase sowie ein Zuleitungssystem (12, 15, 16) aufweist, welches das noch Sauerstoff enthaltende flüssige Kohlendioxid dem im Speichertank (13) befindlichen, flüssigen Kohlendioxid im Bereich von dessen Flüssigkeitsspiegel (17) ohne Turbulenz zuführt, dadurch gekennzeichnet, daß das Zuleitungssystem (12,15, 16) ein von unten in den Speichertank (13) ragendes, oben offenes Steigrohr (12) großen Querschnittes aufweist, in welchem ein von einem Heizmedium durchflossenes Wärmetauscherrohr (18) angeordnet ist und von dessen oberen Ende das ausströmende flüssige Kohlendioxid ohne Turbulenz der Flüssigkeitsoberfläche des in dem Speichertank (13) befindlichen flüssigen Kohlendioxid zugeführt wird.

7. Vorrichtung nach Anspruch 6, dadurch gekennzeichnet, daß um das obere Ende des Steigrohres (13) eine schraubenlinienförmige, offene Rinne (16) mit kleinen Neigungswinkel verläuft, über welche das aus dem oberen Ende des Steigrohres (13) austretende, flüssige Kohlendioxid turbulenzfrei der Flüssigkeitsoberfläche im Speichertank (13) zugeführt wird.

8. Vorrichtung nach Anspruch 7, dadurch gekennzeichnet, daß die offene Rinne (16) ganz oder teilweise mit Edelstahlwolle gefüllt ist.

9. Vorrichtung nach den Ansprüchen 6 bis 8, dadurch gekennzeichnet, daß in der Leitung (20) für das Abziehen der Flüssigphase ein Siphon angeordnet ist, dessen höchste Stelle mit dem Gasphasenraum des Speichertanks (13) verbunden ist.

10. Vorrichtung nach Anspruch 6, dadurch gekennzeichnet, daß das Wärmetauscherrohr (18) von Kohlendioxid durchströmt wird, welches dem Verflüssiger der Anlage zugeführt wird.
